# EUROPÄISCHE PATENTSCHRIFT

(11) **EP 0 440 045 B1**
(45) Veröffentlichungstag und Bekanntmachung des Hinweises auf die Patenterteilung: **03.04.1996**
(21) Anmeldenummer: 91100533.8
(22) Anmeldetag: 17.01.1991
(51) Int. Cl.: G07F 7/08, G07F 1/06, B42D 15/02

(54) **Wertpapier mit optisch variablem Sicherheitselement**
Valuable document with optically variable security element
Papier de valeur avec élément de sécurité optiquement variable

(30) Priorität: 01.02.1990 DE 4002979
(43) Veröffentlichungstag der Anmeldung: 07.08.1991
(73) Patentinhaber: GAO Gesellschaft für Automation und Organisation mbH, D-81307 München (DE)
(72) Erfinder: Kaule, Wittich, W-8089 Emmering (DE)
(74) Vertreter: Klunker . Schmitt-Nilson . Hirsch

(56) Entgegenhaltungen:
- EP-A- 0 024 053
- EP-A- 0 330 738
- EP-A- 0 371 470
- FR-A- 2 331 455
- GB-A- 2 181 993

## Beschreibung

Die Erfindung betrifft einen Datenträger aus Papier, insbesondere ein Wertpapier, eine Banknote oder dergleichen mit einem auf der Oberfläche aufgebrachten optisch variablen Sicherheitselement, wie z. B. ein Beugungsgitter, Hologramm, Interferenzelement, Flüssigkristallpolymer oder dergleichen mit einem zusätzlich in einem Druckverfahren, insbesondere einem Stahltiefdruckverfahren, aufgebrachten Druckbild sowie ein Verfahren und eine Vorrichtung zur Herstellung desselben.

Zum Schutz gegen Nachahmung mit Farbkopierern werden Wertpapiere zunehmend mit optisch variablen Sicherheitselementen, insbesondere Hologrammen, ausgestattet. Der Fälschungsschutz beruht auf der ungenügenden Wiedergabe der optischen Eigenschaften der Elemente durch die Kopiergeräte.

Zur Aufbringung von optisch variablen Elementen (OVD), insbesondere von Hologrammen auf Datenträger, sind verschiedene Verfahren bekannt, sie lassen sich in die drei Kategorien Kleben, Transferdruck und Prägen einteilen.

Beim Kleben werden Haftetiketten, die sich zunächst vorgestanzt auf Silikonpapier befinden, maschinell auf das Papiersubstrat übertragen. Die Haftetiketten weisen einen Schichtaufbau auf, der sich aus einer Haftklebeschicht, einer selbsttragenden Folie mit einer optisch aktiven Schicht über beispielsweise einem Beugungsgitter und einer darüberliegenden Schutzschicht zusammensetzt. Die Dicke eines Haftetiketts liegt typischerweise in der Größe von 50 Mikrometer, wobei der wesentliche Anteil der Dicke auf das Folienmaterial entfällt.

Beim Transferdruck, auch Heißprägen genannt, wird das optisch variable Element auf einem Transferband vorgefertigt und in einem nachfolgenden Arbeitsschritt auf das Substrat übertragen. Der auf das Papier übertragene Aufbau besitzt typischerweise eine Dicke im Bereich von wenigen Mikrometer. Im Fall von Hologrammen besteht der übliche Schichtaufbau des Elements aus einer Heißklebeschicht, einer Lackschicht mit Prägung, einer Aluminium-Aufdampfschicht und einer transparenten abdeckenden Schutzschicht. Dieser Schichtaufbau befindet sich zunächst auf der Transferfolie, wobei er mit einer Release-schicht (z. B. einer Wachsschicht) auf der Folie "befestigt" ist. Zum Transfer wird das Band mit der Heißklebeschicht auf das Substrat aufgelegt, durch Anpressen eines geheizten Stempels wird die Heißklebeschicht aktiviert, so daß sich das Element mit dem Substrat verbindet. Gleichzeitig schmilzt die Trennschicht, wodurch sich das Hologramm vom Transferband löst. Das Transferprinzip ist heute das am häufigsten angewandte Verfahren und wird insbesondere zum Aufbringen von Hologrammen auf Kunststoff-Kreditkarten verwendet.

Das Prägeverfahren eignet sich vor allem für Beugungselemente, wie Hologramme und optische Gitter. Hierbei wird auf ein Substrat eine Schicht aus einem aushärtbaren Lack aufgetragen, der vorzugsweise mit einer extrem dünnen und reflektierenden Metalloberfläche versehen ist. Mit einem Prägestempel wird in die Lackschicht die beugungsoptische Reliefstruktur eingeprägt, nach dem Aushärten des Lacks wird die Struktur mit einem Schutzlack abgedeckt Das fertige Element weist einen Schichtaufbau aus, der aus den aufeinanderfolgenden Schichten von Lack mit Metallschicht und Reliefstruktur sowie der Schutzlackschicht besteht.

Jedes der Verfahren und der daraus resultierenden Produkte hat seine speziellen Vor- und Nachteile. Klebeetiketten beispielsweise sind technisch einfach herstellbar und problemlos auf die vorgesehenen Substrate übertragbar. Extrem nachteilig für eine Anwendung auf dem Wertpapiersektor ist bei Klebeetiketten allerdings die Möglichkeit, die Elemente als Ganzes vom Substrat zu lösen und auf gefälschte Produkte zu übertragen. Aus diesem Grund werden für Wertpapieranwendungen die Transfer- und Prägeelemente bevorzugt.

Die Transfer- und Prägeelemente genügen weitgehend dem auf dem Wertpapiersektor geforderten Bedürfnissen an Fälschungssicherheit, jedoch stellen sich bei der Fertigung von Wertpapieren mit diesen Elementen eine Reihe von fertigungstechnischen Problemen. Im besonderen Maße sind die beiden folgenden Randbedingungen zu beachten.

Als erster Punkt ist zu berücksichtigen, daß Wertpapiere üblicherweise ein sicherheitstechnisch hochwertiges Druckbild besitzen; diese Druckbilder werden in den meisten Fällen mit Hilfe von Stahltiefdruckverfahren aufgebracht. Stahltiefdruck und verwandte Verfahren erfordern, damit sich die Druckfarben gut mit dem Substrat verbinden, eine relativ hohe Oberflächenrauhigkeit des Substrats. Rauhe Oberflächen jedoch sind für die Aufbringung von optischen Elementen ungeeignet.

Zum zweiten ist zu beachten, daß das Wertpapier beim Stahltiefdruck auf seiner ganzen Fläche einer sehr hohen Druckbelastung ausgesetzt wird. Eventuell vor dem Druck aufgebrachte optische Elemente werden hierdurch gewöhnlich in ihrer optischen Wirkung herabgesetzt und können durch die sich vom Papieruntergrund durchprägende Papierrauhigkeit sogar beschädigt oder völlig zerstört werden.

Bei der Herstellung von mit optisch variablen Elementen ausgestatteten Wertpapieren stattete man aufgrund dieser Problematik deshalb das Wertpapier entweder zuerst mit dem Druckbild aus und brachte das OVD in einem der darauffolgenden Verfahrensschritte auf oder man zerlegte die OVD-Aufbringung in Einzelschritte, wobei die durch das Stahltiefdruckverfahren nicht gefährdeten Maßnahmen vor dem Bedrucken, die anderen aber ebenfalls erst nach dem Druckvorgang vorgesehen wurden. Bei dieser Vorgehensweise nahm man bewußt in Kauf, daß durch die direkte Verkopplung mit dem Druckvorgang einerseits keine auftragsneutrale Vorfertigung von unbedruckten OVD-Wertpapieren möglich war (keine Produktion auf Halde) und andererseits die Aufbringung der OVD's pro Drucklinie dafür geeignete Maschinen (Transfermaschinen etc.) benötigt. Die pro Drucklinie benötigten "OVD-Maschinen" erhöhen nicht nur die Kosten und den Raumbedarf für den Maschinenpark, sondern bilden aufgrund der abweichenden Produktionskapazität am Ende der Drucklinie jeweils einen Engpaß, der mit erhöhtem Aufwand auszugleichen ist.

Aus der EP-OS 338 378 ist ein derartiges System zur Fertigung von Papierprodukten bekannt, die sowohl ein Druckbild wie ein optisches Beugungselement aufweisen. In einem kontinuierlichen Prozeß wird das Papier zunächst in bekannten Druckwerken bedruckt. Anschließend wird analog zum beschriebenen Prägeverfahren in einem Arbeitsgang ein strahlungshärtbarer Lack aufgetragen und mit einer Beugungsstruktur versehen. In nachfolgenden Arbeitsgängen wird die Beugungsstruktur mit einer reflektierenden Metallschicht bedampft und mit einem Schutzlack versehen.

Gemäß FR-A-2 331 455 (z.B. Seite 2) wird ein Hologramm drucktechnisch auf einem Substrat trotz dessen faseriger Struktur ermöglicht, indem zuvor ein dünner thermoplastischer Überzug (z.B. in Form eines Streifens 8 wie in Fig.6) aufgebracht wird.

Nach der EP-A-0 330 738 weist das Substrat (3) eines Dokuments (1) eine schwer fälschbare Struktur (7) auf, deren Teilflächen (8, 9, 10) durch eine Reliefstruktur (12, 12') definiert sind, welche ein optisch (bei Beobachtung) variables Element darstellt.

Die rangältere EP-A-0 371 470 (= Patentanmeldung Nr. 89 121 973.5) offenbart zwar bereits ein Wertpapier (C) mit einer glatten Oberfläche (1) und einem Bild (2), ist jedoch erst nach dem Zeitrang der vorliegenden Anmeldung veröffentlicht und zählt daher nur nach Art. 54 (3) (4) EPÜ zum Stand der Technik. Neuheitsschädlich ist dieses Dokument indes nicht: Das Merkmal eines optisch (bei der Betrachtung) variablen Elements ist in der vorliegenden Anmeldung neu gegenüber EP-A-0 371 470 (dessen Bild 2 ist nur in der Herstellung variabel).

GB-A-2 181 993 offenbart nur den Ausgangspunkt der vorliegenden Anmeldung, nämlich den grundsätzlichen Gedanken, zum Schutz eines (offenbar papierenen) Wertdokuments gegen Fälschung ein Hologramm auf dem Dokument aufzukleben. Eine besondere Vorbereitung des Dokuments für die Aufklebung ist nicht angegeben.

In anderen bekannten Systemen wird der Arbeitsgang der Hologrammaufbringung zweigeteilt. Im Anschluß an die Papierherstellung wird in einem ersten Teilschritt der Lack auf die Papieroberfläche aufgetragen. Nach dem Bedrucken des Papiers wird im nächsten Teilschritt das optische Gitter eingeprägt.

In der US-PS 4,420,515 ist eine Variante dieses zweiteiligen Verfahrens beschrieben. Auf ein Kunststoff-Transferband mit einer präparierten Oberfläche wird zunächst eine Metallschicht und eine darüberliegende

Klebeschicht aufgebracht, diese beiden Schichten bilden den Unterbau des zukünftigen Sicherheitselements. Im ersten Teilschritt werden die beiden Schichten auf das Substrat laminiert, wobei unter der Wärme- und Druckeinwirkung beim Laminiervorgang der Unterbau des Elements die Oberflächenqualität des Transferbandes annimmt. Im zweiten Teilschritt werden ein Druckbild und eine optisch wirkende Reliefstruktur auf das Substrat aufgebracht.

Die erzwungene Reihenfolge von Bedrucken und Aufbringen der optisch wirksamen Schichten bzw. das Aufbringen der optisch wirksamen Strukturen führt, wie bereits angedeutet, zu einer Reihe von schwerwiegenden Nachteilen.

Ein Nachteil der bekannten Verfahren besteht in den stark differierenden Fertigungsgeschwindigkeiten von Druckmaschinen und den Vorrichtungen, die die optischen Elemente aufbringen. Vergleicht man hierbei Maschinen des gleichen Typs, wie beispielsweise Bogen-Druckmaschinen und Bogen-Hologramm-Maschinen, dann wird auffällig, daß Hologramm-Maschinen eine um einen Faktor 4 niedrigere Verarbeitungsgeschwindigkeit besitzen. Die geringere Arbeitsgeschwindigkeit der Hologramm-Maschinen hat prinzipielle verfahrenstechnische Gründe, so ist beispielsweise das Prägen von mikrometerfeinen Strukturen ein sehr sorgfältig durchzuführender und damit zeitaufwendiger Verfahrensschritt. In einer Fertigungskette aus Druckmaschinen und Hologramm-Maschinen stellt somit die Hologramm-Aufbringung einen die Fertigungsgeschwindigkeit begrenzenden Engpaß dar.

Die erzwungene Reihenfolge in der Fertigung wirkt sich besonders nachteilig im Fall der Wertpapierfertigung aus. Stahltiefdruckmaschinen sind verfahrensbedingt fast ausschließlich Bogen-Maschinen, weshalb auch die nachfolgende Hologrammaufbringung auf Bogen-Maschinen zu erfolgen hat. Bekanntlich weisen aber gerade Bogen-Maschinen wegen der Handhabung des Bogenmaterials prinzipiell eine niedrige Verarbeitungsgeschwindigkeit auf, diese Eigenschaft trifft auch auf Hologramm-Maschinen zu. Da wegen der bereits geschnittenen Bögen im Rahmen der Hologramm-Fertigung auch nicht auf die deutlich schneller arbeitenden Rollen-Maschinen ausgewichen werden kann, ergibt sich als Folge, daß unter allen möglichen Gestaltungen einer Fertigungskette für Wertpapiere die bekannten Verfahren nur solche Varianten mit der minimal möglichen Verarbeitungsgeschwindigkeit zulassen.

Ein weiterer Nachteil der bekannten Verfahren ist ihre schwierige Eingliederung in den Organisationsablauf von Wertpapierdruckereien. Aus sicherheitstechnischen Gründen ist es bei der Wertpapierherstellung praktisch unumgänglich, daß der Druckvorgang, insbesondere das Drucken der Seriennummer, den letzten Verarbeitungsvorgang vor der Auslieferung der Wertpapiere darstellt. In Wertpapierdruckereien ist es deshalb feste Gepflogenheit, Papier mit den zugehörigen Sicherheitsmerkmalen wie Wasserzeichen, Sicherheitsfaden und eventuellen optischen Elementen vorzufertigen und anschließend zu bedrucken. Die Beibehaltung dieser Fertigungsfolge ist dabei bei den bekannten Verfahren ebenfalls nicht möglich.

Ein weiterer Nachteil der bekannten Verfahren ist der Zugriff auf Technologien, die im Bereich der Papierherstellung und Drucktechnik unüblich sind. Unter diesem Aspekt stellt beispielsweise das Vakuumbedampfen der geprägten Elemente (siehe EP-OS 338 378) oder eines präparierten Transferbandes (siehe US-PS 4,420,515) eine Fremdtechnologie dar, die sich derzeit in Papier- und Druckbetriebe nicht integrieren läßt. Gründe hierfür sind die schon erwähnten unterschiedlichen Verarbeitungsgeschwindigkeiten der verschiedenen Maschinen, die derzeit noch hohe Anfälligkeit der Fremdtechnologien, die Notwendigkeit von Spezialisten usw., so daß auch bereits aus diesen Gründen ein reibungsloser Betrieb einer Fertigungskette nicht gewährleistet ist.

Ausgehend von diesem Stand der Technik und seinen Nachteilen stellt sich die Aufgabe, eine Wertpapierform und ein Verfahren zu seiner Herstellung zu finden, das es gestattet,
- die für das Druckbild und das optische Element notwendigen Fertigungsschritte variabel in ihrer Reihenfolge anzuordnen,
- die verschiedenen Fertigungsmaschinen nach ihrer Fertigungskapazität und Verarbeitungsgeschwindigkeit auszuwählen und zusammenzustellen und
- ohne Fremdtechnologie und ohne Störung des Organisationsablaufs bei Papierherstellern und in Druckbetrieben, insbesondere in Wertpapierdruckereien in der gewohnten Umgebung zu fertigen.

Die Aufgabe wird durch die im Kennzeichen des Hauptanspruchs genannten Merkmale gelöst. Vorteilhafte Weiterbildungen sind den Unteransprüchen zu entnehmen.

Der Erfindung liegt die bisher vernachlässigte Erkenntnis zugrunde, daß optisch variable Elemente und Papier zwei Materialien mit höchst unterschiedlichen Eigenschaften sind und daß entsprechend der vorgesehenen Funktion auch extrem verschiedene Anforderungen an die beiden Materialien gestellt werden. Papier, insbesondere Wertpapier, hat neben anderen Eigenschaften eine gewisse "Griffigkeit" aufzuweisen, weiter muß das Papier Druckfarben gut annehmen und binden können. Diese Eigenschaften erreicht man durch Wahl spezieller Papierarten, vorzugsweise Hadernpapier sowie durch Einstellung einer vorbestimmten Oberflächenrauhigkeit und -struktur. Optisch variable Elemente haben dagegen optische Eigenschaften mit möglichst hohem Wirkungsgrad aufzuweisen. Die physikalischen Gesetze erfordern hierfür aber in erster Linie Oberflächenstrukturen, die sich durch eine sehr glatte und ebene Oberfläche auszeichnen.

Beim Aufbringen der optischen Elemente auf Papier wird deshalb ein Ausgleich zwischen den unterschiedlichen Oberflächenqualitäten notwendig. Gemäß dem derzeitigen Stand der Technik erfolgte der Ausgleich bisher ausschließlich dadurch, daß der Aufbau und/oder die Aufbringungsverfahren der optischen Elemente der Rauhigkeit des Substrats angepaßt wurden. Die Verlagerung des Oberflächenausgleichs in den Bereich der optischen Elemente wurde auch durch den Umstand stark begünstigt, daß insbesondere im Wertpapierbereich die Papiereigenschaften innerhalb enger Toleranzen festgelegt sind und somit im ganzen Fertigungsprozeß als nicht variable Größen verstanden wurden.

Im Gegensatz zur bisherigen Vorgehensweise besteht der Kern der Erfindung darin, in einem ersten Schritt mit Verfahren, die bei Papierherstellern und in Druckbetrieben geläufig sind, das Papier in dem für das optisch variable Element bestimmten Flächenbereich das Papier durch lokale Glättung an die Ebenheitsforderung der optischen Elemente anzupassen. Geglättet wird dabei im wesentlichen nur der Flächenbereich, der vom vorgesehenen Element abgedeckt wird. Der Restbereich wird bei der Glättung soweit wie möglich unverändert belassen, so daß dort die für die Druckverfahren benötigte Oberflächenqualität erhalten bleibt. Das optische Element wird in einem nachfolgenden Arbeitsschritt, vorzugsweise bereits vor dem Bedrucken, in den geglätteten Bereich aufgebracht.

Durch diese überraschend einfache Maßnahme schafft man auf einen Datenträger lokal begrenzte und auf den jeweiligen Bestimmungszweck optimal angepaßte Randbedingungen, welche auch die Erfüllung sehr unterschiedlicher Anforderungen sicherstellt.

Zum Glätten und Verfestigen der Papieroberfläche sind aus der Druck- und Papiertechnik verschiedene Verfahren bekannt, die sich im wesentlichen in die Kategorien Satinieren, Streichen und Beschichten einteilen lassen. Diese Verfahren können in modifizierter Form auch für die lokale Glättung der Oberfläche verwendet werden.

Zum Satinieren führt man das Papier in Rollen- oder Bogenform in ein Glättwerk ein, das beispielsweise aus zwei gegenüberliegenden Zylindern besteht. Um eine lokal begrenzte Glättung zu erreichen, sind eine oder beide Zylinder des Glättwerks in dem Bereich, in dem die Aufbringung des Elements erfolgen soll, erhaben gestaltet, so daß das Papier vor allem in diesem Bereich zusammengedrückt und geglättet wird. Dabei wird ein Druck in der Größe von 100 - 1.000 kp/cm Berührungslinienlänge ausgeübt. Den Erfordernissen entsprechend werden die Hologrammbereiche entweder nur bei einem oder bei beiden Zylindern erhaben gestaltet.

Beim Streichen und verwandten Verfahren wie Gießen, Gußstreichen usw. wird auf die Papieroberfläche ein Strich bzw. ein Guß aufgetragen. Um ein lokal begrenztes Streichen zu erhalten, werden an die Erfindung angepaßte Auftragwerke notwendig. Für den streifenweisen Auftrag eignen sich beispielsweise Düsenauftragwerke mit seitlich begrenzten Schlitzdüsen, während für beliebig geformte Flecken Gravurwalz- oder Rundsiebwerke vorzuziehen sind. Streich- und Gußmassen bestehen im wesentlichen aus mineralischen Pigmenten und Bindemitteln, die die Pigmente zusammenhalten und im Rohpapier verankern. Die Partikelgröße liegt typisch im Bereich von Mikrometern, weshalb gestrichene oder gegossene Papiere eine geglättete Oberfläche aufweisen.

Beim Beschichten wird ähnlich wie beim Streichen auf die Papieroberfläche eine Ausgleichsmasse aufgetragen, die zumindest zum Teil aus Kunststoffmaterialien besteht. Wie beim Streichen eignen sich zum Auftrag der Ausgleichsmasse Düsenauftragwerke, Gravurwalzwerke oder Rundsiebwerke.

Als Glättwerke können sowohl Rollen- wie Bogenmaschinen verwendet werden. Mit kontinuierlich glättenden Rollen-maschinen lassen sich auf Papierbahnen eine oder mehrere streifenförmige Zonen erstellen, die über die gesamte Bahnlänge eine geglättete Oberfläche aufweisen. Diese streifenförmigen Zonen eignen sich insbesondere zur späteren Aufbringung von Endloselementen, die in Band- oder Fadenform vorliegen. Besonders vorteilhaft ist es, die Endloselemente ebenfalls mit Rollenmaschinen aufzubringen.

Um für die Hologrammaufbringung hinreichend glattes Papier zu erzeugen, ist sehr hoher Druck erforderlich. Je nach Papiersorte oder Form des geglätteten Bereichs kann es dabei vorkommen, daß sich das Papier wellt und zum Drucken nicht mehr eignet. In diesem Fall benutzt man ein Glättwerk, in dem die Bereiche, an denen die Hologrammaufbringung erfolgen soll, gegenüber dem Restbereich nur um 100stel Millimeter (vorzugsweise 5 - 50 Mikrometer) erhaben sind. Dadurch wird erreicht, daß einerseits im Hologrammbereich das Papier bei hohem Druck stark geglättet wird, während im übrigen Bereich das Papier nur so viel zusammengedrückt wird, daß keine Wellen und Verzüge auftreten, aber die für den Stahlstich erforderliche Rauhigkeit erhalten bleibt.

Die Glättstation läßt sich innerhalb einer Fertigungskette praktisch an beliebiger Stelle vor der Hologramm-aufbringung als Modul plazieren. Die kleinste Maschineneinheit besteht nur aus einer Abrolleinrichtung für die Papierbahn, einer Glättstation und einer Aufrolleinrichtung. Diese Einheit kann um geeignete Vorrichtungen zum Bedrucken des Papiers und zur Aufbringung von Hologrammen erweitert werden. Insbesondere können zwischen Glättstation und Aufrolleinrichtung folgende Einheiten eingefügt werden:
1. Einrichtungen zum Aufbringen eines Füllmittels, eines Haftvermittlers oder eines Klebemittels im Hologrammbereich.
2. Einrichtungen zum Trocknen für den Haftvermittler oder die Klebemittel mit Hilfe von Wärme, IR- oder UV-Strahlung oder Elektronenstrahlen.
3. Einrichtungen zum Aufbringen der optisch variablen Elemente, alternativ können hierfür eingesetzt werden
   - Transfereinrichtungen für die Aufbringung von Heißpräge-Hologrammen oder anderen Heißpräge-Elementen,
   - Einrichtungen zum Aufbringen von spiegelnden Flächen für nachträgliche Hologrammeinprägungen,
   - Einrichtungen zum Auftragen von Lacken und ähnlichen Beschichtungen und zum Einprägen von optischen Beugungsstrukturen.
4. Einrichtungen zum Härten der geprägten Lacke, Beschichtungen oder Kleber mit Hilfe von Wärme oder Strahlung.
5. Einrichtungen zum Aufbringen von Schutzschichten mit Hilfe von Druck-, Beschichtungs- oder Kaschierverfahren.
6. Einrichtungen zur Qualitätsprüfung an den optisch variablen Elementen.
7. Einrichtungen zum Kennzeichnen oder Induvidualisieren der Bahnen, Nutzen oder Elemente.
8. Druckwerke für weitere Druckvorgänge.

Die gegebene Aufzählung ist weder vollständig noch legt sie die Reihenfolge der Maschinen zwingend fest, sie stellt vielmehr nur eine von vielen möglichen Alternativen dar. Der Maschinentyp und ihre Reihenfolge in der Fertigungskette können vom Fachmann anhand der Aufzählung je nach gewünschtem Fertigungsablauf und Elementtyp ausgewählt oder variiert werden. Ebenso ist es möglich, an geeigneten Stellen Aufrollvorrichtungen zum Zwischenspeichern oder weitere bekannte Maschinenelemente wie Rollenschneider, Bogenschneider oder Sortiervorrichtungen einzufügen.

Trotz der verblüffend einfachen erfindungsgemäßen Maßnahmen bieten die erfindungsgemäße Datenträger und die Möglichkeiten zu seiner Herstellung zahlreiche Vorteile.

Ein erster Vorteil ist die Qualitätsanhebung der mit optischen Elementen ausgestatteten Wertpapiere. Während früher der Schichtaufbau der Elemente auf die Papiereigenschaften abgestimmt werden mußte - man bedenke nur die dicken Klebeschichten zum Ausgleich der Oberflächenrauhigkeit -, so können jetzt im Rahmen der Erfindung die Elemente auf ihre eigentliche Funktion optimiert werden. Allein die Verwendung dünner Klebeschichten führt zu einer Reihe von Verbesserungen. Eine filmdünne Klebeschicht gewährleistet beispielsweise eine hohe Elastizität des Elements, wodurch es Belastungen, wie sie vor allem beim Wertpapierumlauf auftreten, leichter überleben kann. Weiter erhöht eine dünne Klebeschicht auch die Fälschungssicherheit, da ein Abspalten des Elements entlang der Klebeschicht erschwert oder unmöglich gemacht wird.

Eine weitere Qualitätsanhebung ergibt sich durch die Möglichkeit, von geprägten Hologrammen auf Transferelemente überzugehen. Transferelemente werden als Sicherheitselemente gegenüber geprägten Elementen bevorzugt aufgrund des einfacheren Aufbringverfahrens und des höheren optischen Wirkungsgrades. Da aber Transferelemente typischerweise nur eine Dicke im Bereich von wenigen Mikrometer aufweisen, wurden sie bisher kaum auf Papieroberflächen aufgetragen. Durch das erfindungsgemäße Glätten jedoch schafft man auf der Papieroberfläche aber auch die Voraussetzungen zum Aufbringen derartiger Transferelemente.

Weitere Vorteile ergeben sich aus der Möglichkeit, im Rahmen der Erfindung die Hologramm-Aufbringung an besonders geeigneten Stellen in den Fertigungsablauf einzufügen. Die hieraus resultierende Erhöhung des Fertigungsdurchsatzes bzw. die Erhöhung der Fertigungskapazität zeigt sich am besten bei der Wertpapierherstellung. Die Arbeitsschritte Glätten und Hologramm-aufbringung lassen sich jetzt wegen der Unabhängigkeit vom Druckprozeß noch im Rollenstadium des Papiers durchführen, die hohe Verarbeitungsgeschwindigkeit der Rollen-maschinen ermöglicht es, die Fertigungsengpässe zu umgehen, die bei der Verwendung von Bogen-Maschinen entstehen.

Aus der Unabhängigkeit von Druckprozeß und Hologrammaufbringung ergibt sich als weiterer Vorteil, daß der in den Wertpapierdruckereien übliche Verfahrensablauf eingehalten werden kann. So kann das Papier mit all seinen Sicherheitselementen wie Wasserzeichen, Sicherheitsfaden, optisch variablem Element usw. vorgefertigt und soweit nötig auch gelagert werden. Der besonders sicherheitskritische Druckvorgang stellt wie üblich den letzten Verfahrensschritt dar. Aufgrund der lokalen Oberflächenglättung kann nun auch während des Druckvorgangs kein "Durchprägen" von Oberflächenrauhigkeiten erfolgen. Das Bedrucken von Wertpapier mit bereits aufgebrachten Elementen führt somit auch nicht zur Beeinträchtigung ihrer Qualität. Dies gilt insbesondere dann, wenn bei der Oberflächenglättung nicht nur die Oberflächenrauhigkeit beseitigt, sondern das Papier auch noch mit einer lokalen Vertiefung versehen wird, in die das Element eingebettet wurde.

Weitere Vorteile und Merkmale der Erfindung ergeben sich aus den Fig. und den nachfolgenden Ausführungsbeispielen.

Es zeigen:
- Fig. 1: ein Wertpapier in Aufsicht mit vorbehandelten Flächenbereichen,
- Fig. 2: einen Schnitt durch ein Wertpapier mit einem kalandrierten Flächenbereich,
- Fig. 3: einen Schnitt durch ein Wertpapier mit zwei gegenüberliegenden gestrichenen und gewalzten Bereichen,
- Fig. 4: eine Kalandrierwalze zum lokalen Glätten von Papier,
- Fig. 5: ein System von Glätten von Papier und Aufbringen von Hologrammen.

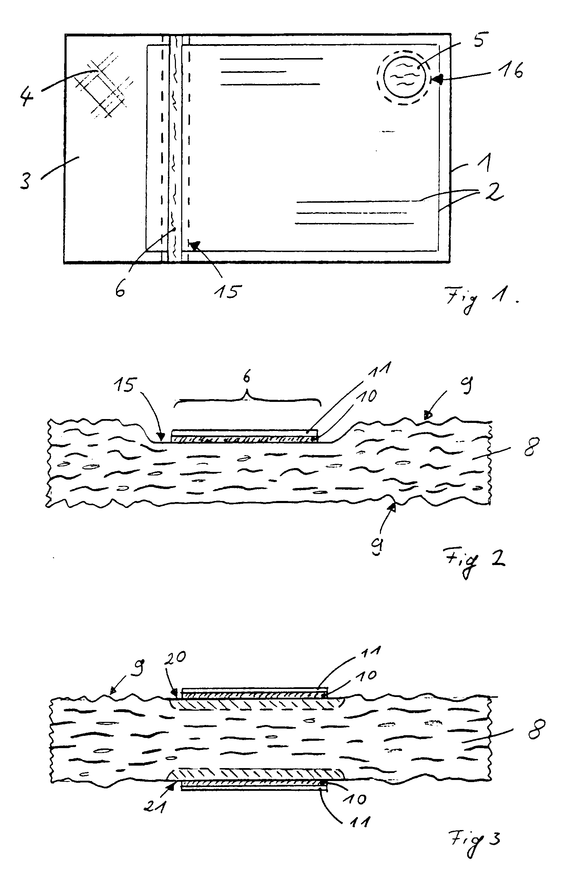

Fig. 1 zeigt einen Datenträger in Form einer Banknote 1, sie weist einen bedruckten Bereich 2 und einen weißen Randbereich 3 auf, in dem sich ein Wasserzeichen 4 befindet. Als Kopierschutz sind auf der Oberfläche zwei optisch variable Elemente 5 und 6 aufgebracht. Als optisch aktive Schichten können diese Elemente holografische Reliefstrukturen, Beugungsstrukturen, Interferenzschichten, Flüssigkristallpolymere und andere optisch wirkende Flächen enthalten. In bevorzugten Ausführungsformen stellt das Element 5 ein Reflexionshologramm mit beispielsweise kreisförmiger Grundfläche dar. Das Element 6 ist in Bandform auf die Oberfläche aufgebracht und erstreckt sich über die gesamte Breite der Banknote, als optisch aktive Schicht enthält dieses Element vorzugsweise ein sich wiederholendes fortlaufendes Beugungsgitter.

Die Note weist gemäß der Erfindung geglättete Bereiche 15 und 16 auf. In der Figur sind die Bereichsgrenzen durch unterbrochene Linien angedeutet. Die optisch variablen Elemente 5 und 6 sind innerhalb der geglätteten Flächenbereiche 15 und 16 aufgebracht. Vorzugsweise wird die Größe der Bereiche so gewählt, daß die Elemente im Rahmen der Fertigungstoleranzen sicher innerhalb dieser Bereiche plaziert werden können, jedoch ist es auch möglich, die Bereiche entsprechend den Designwünschen folgend eine beliebige Umrißform und Größe zu geben. Die geglätteten Bereiche können durch lokales Satinieren, Streichen oder Beschichten hergestellt werden.

Fig. 2 zeigt in Vergrößerung einen Schnitt durch die Banknote 1 im Bereich des Elements 6. Durch lokales Satinieren ist im Flächenbereich 15, ebenso wie im nicht gezeigten Bereich 16, eine glatte Oberfläche erzeugt worden. Außerhalb dieser Bereiche 15 und 16 weist die Banknote die ursprüngliche Oberflächenrauhigkeit 9 auf. Aufgrund der hohen Oberflächenqualität in den geglätteten Bereichen erhöht sich der Variationsspielraum für das Aufbringen und die Ausführungsformen der optisch variablen Elemente 5 und 6.

In einer ersten Variante kann das Element 6 nach dem Prägeverfahren aufgebracht werden. Im geglätteten Flächenbereich wird zunächst eine Klebeschicht 10 aufgetragen. Die Schichtdicke kann aufgrund der Oberflächenqualität jetzt für die Gebrauchsfähigkeit der Note hinsichtlich Flexibilität, Fälschungssicherheit und Wirkung des Elements optimiert werden. Im nächsten Verfahrensschritt wird dann in die Klebeschicht 10 ein Beugungsgitter eingeprägt. In abschließenden Arbeitsschritten wird dann die geprägte Oberfläche mit einer dünnen Metallrelexionsschicht versehen und mit einem Schutzlack 11 überzogen, die geprägten Gitterstrukturen und die Metallschicht sind in der Fig. 2 wegen ihrer mikroskopischen Größe nicht dargestellt.

In einer zweiten Variante wird das Element 6 nach dem Transferverfahren aufgebracht. Das Element liegt hierbei in vorgefertigter Form auf einem Transferband vor. Die Vorfertigung auf dem Band ermöglicht es, beliebige optisch wirksame Schichten in den Schichtaufbau einzufügen; besonders sei hier auf reflektierende Metallschichten, Interferenzschichten, Beugungsgitter und Hologramme verwiesen. Die Glättung des Papiersubstrats 8 im Flächenbereich 15 der Aufbringung ermöglicht es, Transferelemente trotz ihrer geringen Dicke und ihrer geringen inneren Festigkeit auf Papier in guter Qualität zu übertragen. Nach dem Übertragen ergibt sich ein Schichtaufbau ähnlich wie beim Prägeverfahren, er besteht aus einer Klebeschicht 10, darüberliegenden optisch wirkenden Schichten sowie einer oder mehreren Lackschichten 11.

Beim Satinieren wird auf das Papier in den zu glättenden Bereichen ein hoher Druck ausgeübt, wodurch die Papierfasern irreversibel aneinandergepreßt und die Oberflächenrauhigkeit reduziert wird. Neben der Glättung bewirkt das Satinieren auch eine Komprimierung des Papiersubstrats 8, als Folge bildet sich eine Vertiefung im Papier aus. Diese Vertiefung hat den Vorteil, daß ein darin liegendes optisches Element in eventuell nachfolgenden Verarbeitungsschritten, wie beispielsweise beim Bedrucken des Papiers, vor Berührung und Beschädigung geschützt ist.

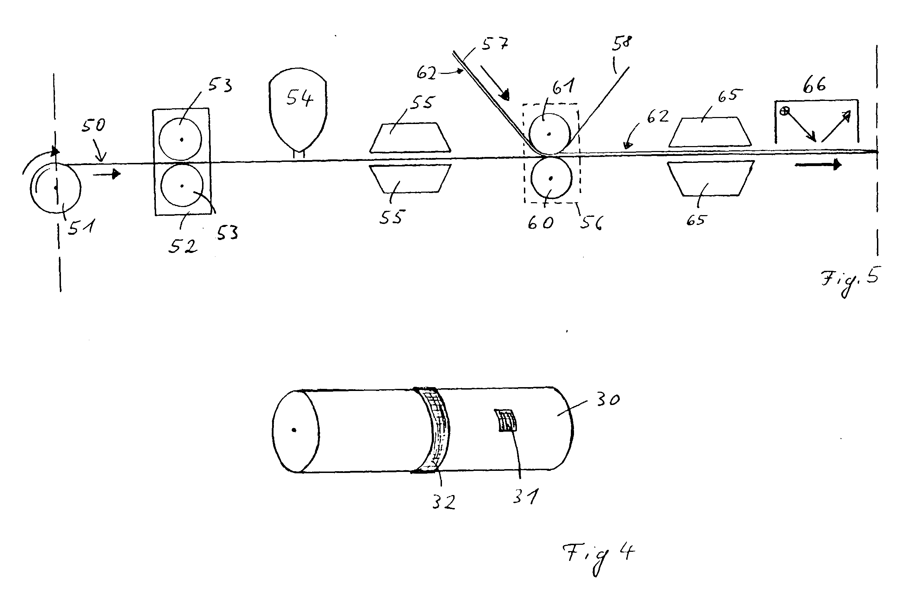

Fig. 3 zeigt ebenfalls in Vergrößerung einen Schnitt durch die Banknote 14, wobei in diesem Ausführungsbeispiel die Oberfläche auf Vorder- und Rückseite durch beidseitiges Streichen geglättet wurde. Hierzu wird in den Flächenbereichen 20 und 21 eine Streichmasse auf das Papiersubstrat aufgetragen. Für eine weniger anspruchsvolle Oberflächenqualität reicht es aus, das Papier und die Streichmasse in bekannten Maschinen zu trocknen. Um eine besonders ebene Papieroberfläche zu erhalten, wurde im gezeigten Beispiel das bestrichene Papier noch zusätzlich durch ein Glättwerk mit hochglanzpolierten Glättzylindern gezogen, wodurch die Streichmasse in das Papier eingedrückt wurde. Das Resultat ist ein Banknotenpapier mit zwei sich gegenüberliegenden geglätteten Flächenbereichen, die nicht oder nur unwesentlich aus der Papierfläche herausragen. Als Streichmasse kann auf die aus der Papierfertigung bekannte Strichfarben zurückgegriffen werden. Auf die geglätteten Bereiche können in bereits beschriebenen Weisen sowohl Präge- wie Transferelemente aufgebracht werden.

Fig. 4 zeigt einen Kalandrierzylinder 30, wie er in Glättstation zum lokalen Glätten von Papier verwendet werden kann. In Zylinder-Glättstationen läuft das Papier zwischen zwei gegeneinandergedrückten Zylindern hindurch. Zum lokalen Glätten werden in einer solchen Glättstation ein oder beide Zylinder durch den in Fig. 4 dargestellten Kalandrierzylinder 30 ersetzt. Dieser Zylinder weist in den Hologrammbereichen erhaben gestaltete Flächen 31 und 32 auf. Die Stufenhöhe zwischen erhabenen und zurückgesetzten Bereichen liegt vorzugsweise im Bereich von einem Millimeter und weniger. Die Fläche 31 erstreckt sich nur über einen kleinen Teil der Umfangsfläche und eignet sich zur Herstellung isolierter geglätteter Bereiche, in die beispielsweise das Element 5 eingesetzt werden kann. Die Fläche 32 erstreckt sich über den gesamten Umfang und erzeugt auf der Papierbahn endlose streifenförmige Zonen, die vor allem zur Aufbringung von Endloselementen 6 geeignet sind.

Um für die Hologrammaufbringung hinreichend glattes Papier zu erzeugen, ist sehr hoher Druck erforderlich. Wenn man diesen Druck nun nur auf Teilbereiche des Papiersubstrats anwendet, so kann sich das Papier je nach seinen Eigenschaften und nach Umrißform der zu glättenden Bereiche wellen, es ist dann zum Bedrucken und für den späteren Gebrauch nicht mehr geeignet. In solchen Fällen wird das Glättwerk vorzugsweise so gestaltet, daß die erhabenen Bereiche auf dem Kalandrierzylinder sich gegenüber den Restbereichen nur in der Größenordnung von Millimeterbruchteilen, vorzugsweise 5 - 50 Mikrometer abheben. Der Abstand der beiden Kalandrierzylinder wird so eingestellt, daß einerseits im Hologrammbereich das Papier bei hohem Druck stark geglättet wird, im Restbereich das Papier aber nur so viel zusammengedrückt wird, daß keine Wellen und Verzüge auftreten. Auf diese Weise vermeidet man die Welligkeit und erhält gleichzeitig die für den Stahlstich erforderliche Rauhigkeit. Der Druck zum Glätten des Papiers liegt typisch im Bereich von 100 - 1.000 kp pro 1 cm Berührungslinie.

Eine andere Variante der Glättung von Papier ist das Streichen und Beschichten. Da die allgemein üblichen Walzenstreichwerke über die ganze Papierbreite arbeiten, muß man zum lokalen Auftragen von Streich- oder Gußmasse entweder diese Maschinen modifizieren oder auf andere Maschinentypen zurückgreifen, die an die Erfindung angepaßt sind. Solche Maschinentypen sind beispielsweise Düsenauftragswerke mit seitlich begrenzten Schlitzdüsen für streifenweisen Auftrag oder Gravurwalzwerke bzw. Rundsiebwerke für den fleckenförmigen Auftrag der Gußmasse. Um Flächen mit beliebig geformten Umrissen für die Aufbringung der Elemente ins Register mit plazierten Wasserzeichen zu bringen, kann ein in der Drucktechnik übliches Insetting-Werk verwendet werden.

Aus der Streichtechnik bekannte Vorgehensweisen können auch auf das lokale Streichen der Papieroberfläche übertragen werden, beispielsweise kann man auf mehrstufiges Streichen mit Vor- und Endstrich oder auf Kalandrierstreichen mit Hilfe von Streichkalandern zurückgreifen. Besonders vorteilhaft ist eine vom Gußstreichen abgeleitete Methode, wobei zunächst auf die Papieroberfläche eine Streichmasse lokal aufgebracht wird und anschließend in einem Glättwerk mit einem geheizten hochglanzpolierten Kalandrierzylinder getrocknet und mit einer spiegelglatten Oberfläche versehen wird.

Eine andere Variante der Glättung ist die Beschichtung, wobei sich die Begriffe Streichen und Beschichten überlappen. Der wesentliche Unterschied zwischen den beiden Verfahren liegt darin, daß beim Streichen mineralische Stoffe aufgetragen werden, während beim Beschichten die Beschichtungsmasse zumindest teilweise einen Kunststoff enthält. Mit geringen Modifikationen sind beim Beschichten die gleichen Auftragsverfahren und Maschinen zu verwenden wie beim Streichen, weshalb zum Themenkreis Beschichten nur auf die obigen Ausführungen verwiesen wird.

Fig. 5 zeigt ein Beispiel für eine Fertigungskette zur Herstellung eines erfindungsgemäßen Wertpapiers 1. Die Fertigungskette enthält Stationen zum Vorbereiten der Papieroberfläche, zum Aufbringen und zum Prüfen von Transferhologrammen. Sämtliche Maschinen sind als Rollenmaschinen ausgelegt und können irgendwo zwischen Papiermacherei und Druckerei angesiedelt sein. Diese Randbedingung ist in Fig. 5 durch die zu Beginn und am Ende der Fertigungskette vorgesehenen strichlierten Trennlinien angedeutet. In einer bevorzugten Ausführungsform wird die Fertigungskette bei der Papierherstellung vor dem sogenannten Querschneider eingefügt, d. h. die Papierrolle 51 kommt vom Bahnschneider der Papiermaschine, bei dem die von der Papiermaschine kommende breite Bahn in schmalere Einzelbahnen zerlegt wird; anschließend an die Station 66 folgt der Querschneider, der die Papierbahn in Einzelbögen unterteilt.

Die Wertpapierbahn 50 wird kontinuierlich von den Stationen zugeführt. Das Papier kann dabei von einer Vorratsrolle 51 abgezogen werden oder auch direkt von papierproduzierenden Maschinen zugeführt werden. Als erstes läuft das Papier in ein Glättwerk 52 ein, das aus zwei gegenüberliegenden Kalandrierzylindern 53 besteht. Die Zylinder weisen erhabene Bereiche 32 auf, die sich, wie in Fig. 4 gezeigt, über den gesamten Umfang der Zylinder erstrecken. Entsprechend der vorhandenen Nutzenzahl wiederholen sich die erhabenen Bereiche über die Breite des Zylinders. Nach der lokalen Glättung wird das Papier einer Auftragstation 54 zugeführt, die auf den oder die geglätteten Streifen einen Haftvermittler aufträgt. Als nächstes läuft die Papierbahn in eine Trocknungseinrichtung 55 ein, hier wird der Haftvermittler mittels Wärme getrocknet. Alternativ zur Trocknung mittels Wärme können auch andere Verfahren eingesetzt werden, wie beispielsweise IR-, UV- oder Elektronenstrahl-Trockner. In der nachfolgenden Transferstation 56 wird ein Endloshologramm auf den oder die geglätteten Streifen aufgetragen. Das Transferband 57 mit den vorgefertigten Hologrammen wird von einer nicht dargestellten Vorratsrolle abgezogen und mit der Papierbahn zusammengeführt. Ebenfalls nicht gezeigte Positioniereinrichtungen sorgen dafür, daß das Transferband registergenau zu den geglätteten Streifen zu liegen kommt. Die beiden Rollen 60 und 61 der Transferstation sind beheizt und drücken Transferband und Papierbahn aufeinander. Unter der Druck- und Wärmeeinwirkung löst sich der holografische Schichtaufbau 62 vom Transferband und verbindet sich mit der Papierbahn 50. Das leere Transferband 58 wird dann von der Papierbahn abgezogen und auf einer nicht dargestellten Aufwickeleinrichtung entsorgt. Die mit dem Endloshologramm versehene Papierbahn 50 läuft anschließend auf eine zweite Trockeneinrichtung 65 zu, in der der Transferkleber ausgehärtet wird. Je nach verwendetem Kleber kann auch hier auf verschiedene Trockenverfahren zurückgegriffen werden. Als nächstes läuft die Papierbahn auf die Station 64 zu, in der eine Qualitätsprüfung am Endloshologramm durchgeführt wird. Hier kann beispielsweise durch Abtasten mit einem Lichtstrahl der Beugungswirkungsgrad sowie die Lage des Hologramms auf dem Papier geprüft werden.

Die qualitätsgeprüfte Papierbahn ist nun fertig für den Druck. Sie kann jetzt entweder, wie dargestellt, auf der Aufwickelvorrichtung 65 aufgewickelt und gelagert oder direkt in eine dem Fachmann bekannte Druckmaschine eingeführt werden.

Die dargestellte Fertigungskette ist natürlich nicht die einzig realisierbare Lösung zur Herstellung der erfindungsgemäßen Wertpapiere. So lassen sich beispielsweise in diese Fertigungskette statt einer Transferstation zum Aufbringen von Transferhologrammen auch Prägestationen zum Herstellen von Prägehologrammen oder Maschinen zur Aufbringung anderer Elementtypen einbringen. Ebenso ist es möglich, anstelle der Aufwickelvorrichtung die Papierbahn weiteren Maschinen zuzuführen, wie beispielsweise Druckwerken für Druckvorgänge oder Bogenschneider zum Zerlegen in Bogensortiervorrichtungen usw..

Die beschriebene Fertigungskette besteht aus den übergeordneten Verfahrensstufen Papierherstellung, Element-Aufbringung und Bedrucken. Diese erst durch die Erfindung ermöglichte Reihenfolge ist, wie bereits erwähnt, mit besonders großen Vorteilen hinsichtlich Fertigungsgeschwindigkeit, Fertigungsablauf usw. in die Wertpapier-Herstellung integrierbar. So sind beispielsweise alle für die Aufbringung der Elemente notwendigen Schritte in der Papierfabrik durchführbar, das Papier ist anschließend wie jedes andere Wertpapier weiter verarbeitbar.

Erfindungsgemäß sind somit in der beschriebenen Variante in der Druckerei keine zusätzlichen Maschinen zu installieren, die vielleicht mit dem dort existierenden Raumangebot kollidieren oder den Produktionsdurchsatz beeinträchtigen. Ebenso wenig ist es zwingend, die Aufbringung der Elemente in der Paperfabrik durchzuführen, da die in Fig. 5 gezeigten und in der Beschreibung ausführlich erläuterten Maßnahmen natürlich auch in einer separaten dritten Produktionsstätte vorsehbar sind. Sie lassen sich allerdings auch, wie beschrieben, in die Verfahrensabläufe der Papierfabrik oder der Druckerei als abschließende oder vorgeschaltete Stationen direkt integrieren. Neben der funktionalen Vorteile bietet die Erfindung also auch eine enorme verfahrensmäßige Flexibilität.

## Patentansprüche

1. Datenträger (1), wie ein Wertpapier oder dergleichen, einem optisch variablen Element (5, 6), insbesondere einem Hologramm, und einem ersten Oberflächenbereich (9) mit einer ersten Oberflächenrauhigkeit, welche eine Störung eines darauf aufgebrachten optisch variablen Elements verursacht, dadurch **gekennzeichnet,** daß der Datenträger einen zweiten Oberflächenbereich (15, 20, 21) aufweist, der eine Oberflächenrauhigkeit besitzt, die ein darauf aufgebrachtes optisch variables Element weniger stört, und daß das optisch variable Element (56) auf diesem zweiten Oberflächenbereich aufgebracht ist, wobei das optisch variable Element (5, 6) ein vorgefertigtes Element ist.

2. Datenträger nach Anspruch 1, dadurch **gekennzeichnet,** daß der zweite Oberflächenbereich durch Auftrag einer Beschichtung, Streich- oder Gußmasse erzeugt ist.

3. Datenträger nach Anspruch 1 oder 2, dadurch **gekennzeichnet,** daß der zweite Oberflächenbereich durch Komprimierung des Datenträgers in diesem Bereich erzeugt ist.

4. Datenträger nach wenigstens einem der Ansprüche 1 bis 4, dadurch **gekennzeichnet** , daß das optisch variable Element ein Transferhologramm ist.

5. Datenträger (1), wie ein Wertpapier oder dergleichen, mit einem optisch variablen Element (5, 6), insbesondere einem Hologramm, und einem ersten Oberflächenbereich (9) mit einer ersten Oberflächenrauhigkeit, welche eine Störung eines darauf aufgebrachten optisch variablen Elements verursacht, dadurch **gekennzeichnet,** daß der Datenträger einen zweiten Oberflächenbereich (15, 20, 21) aufweist, der aufgrund einer Komprimierung des Datenträgers (1) in diesem Bereich (15, 20, 21) eine Oberflächenrauhigkeit aufweist, die ein darauf aufgebrachtes optisch variables Element weniger stört, und daß das optisch variable Element (5, 6) auf diesem zweiten Oberflächenbereich (15, 20, 21) aufgebracht ist, wobei das optisch variable Element (5, 6) wenigstens aus einer auf den Datenträger (1) aufgebrachten Lackschicht besteht, in welche die optisch variablen Strukturen in Form eines Reliefs eingebracht sind.

6. Datenträger nach wenigstens einem der Ansprüche 1 bis 5, dadurch **gekennzeichnet**, daß der zweite Oberflächenbereich (15, 20, 21) sich in Form eines Bandes, Streifens oder dergleichen über die Fläche des Datenträgers erstreckt.

7. Datenträger nach wenigstens einem der Ansprüche 1 bis 5, dadurch **gekennzeichnet**, daß der zweite Oberflächenbereich (15, 20, 21) die Form einer Insel, eines Fleckens oder dergleichen aufweist.

8. Sicherheitspapier, das für die Aufnahme eines optisch variablen Elements geeignet ist und das einen ersten Oberflächenbereich (9) mit einer ersten Oberflächenrauhigkeit aufweist, welcher eine Störung eines darauf aufgebrachten optisch variablen Elements verursacht, dadurch **gekennzeichnet**, daß das Sicherheitspapier einen zweiten Oberflächenbereich (15, 20, 21) aufweist, der aufgrund einer Komprimierung des Papiers in diesem Bereich (15, 20, 21) eine Oberflächenrauhigkeit aufweist, die ein darauf aufgebrachtes optisch variables Element weniger stört.

9. Verfahren zur Herstellung eines Datenträgers (1), wie eines Wertpapiers oder dergleichen, mit einem optisch variablen Element (5, 6), insbesondere einem Hologramm, wobei der Datenträger ein Substrat mit einem ersten Oberflächenbereich mit einer ersten Oberflächenrauhigkeit aufweist, welche eine Störung eines darauf aufgebrachten optisch variablen Elements verursacht, dadurch **gekennzeichnet,** daß
- das Substrat zumindest in einem Teilbereich des ersten Oberflächenbereichs geglättet wird, um einen zweiten Oberflächenbereich mit einer zweiten Oberflächenrauhigkeit zu erzeugen, welche ein darauf aufgebrachtes optisch variables Element weniger stört,
- in einem oder mehreren Verfahrensschritten ein vorgefertigtes optisch variables Element auf den zweiten Oberflächenbereich aufgebracht wird,
- das Substrat eventuell weiteren Verfahrensschritten unterzogen und schließlich in einzelne Datenträger zerschnitten wird.

10. Verfahren nach Anspruch 9, dadurch **gekennzeichnet,** daß der zweite Oberflächenbereich (15, 20, 21) durch Komprimierung geglättet wird.

11. Verfahren nach Anspruch 10, dadurch **gekennzeichnet,** daß in dem zu komprimierenden Bereich vor dem Komprimieren eine Beschichtung aufgetragen wird.

12. Verfahren nach Anspruch 10 oder 11, dadurch **gekennzeichnet**, daß der zweite Oberflächenbereich (15, 20, 21) durch Kalandrieren oder Satinieren geglättet wird.

13. Verfahren nach Anspruch 9, dadurch **gekennzeichnet,** daß der zweite Oberflächenbereich (20, 21) durch Auftragen einer Streichfarbe, einer Gußmasse oder einer Beschichtung geglättet wird.

14. Verfahren nach Anspruch 13, dadurch **gekennzeichnet,** daß die Streichfarbe, Gußmasse oder Beschichtung in einem zusätzlichen Glättwerk geglättet wird.

15. Verfahren nach wenigstens einem der Ansprüche 9 bis 12, dadurch **gekennzeichnet**, daß die Glättung des Substrats (1) über dessen Gesamtfläche erfolgt, wobei die Teilflächen der zweiten Oberfläche (15, 20, 21) stärker geglättet werden als die Restfläche des Substrats.

16. Verfahren zur Herstellung eines Datenträgers (1), wie eines Wertpapiers oder dergleichen, mit einem optisch variablen Element (5, 6), insbesondere einem Hologramm, wobei der Datenträger ein Substrat mit einem ersten Oberflächenbereich mit einer ersten Oberflächenrauhigkeit aufweist, welche eine Störung eines darauf aufgebrachten optisch variablen Elements verursacht, dadurch **gekennzeichnet,** daß
- das Substrat zumindest in einem Teilbereich des ersten Oberflächenbereichs komprimiert wird, um einen zweiten Oberflächenbereich zu erzeugen, welcher ein darauf aufgebrachtes optisch variables Element weniger stört,
- auf den zweiten Oberflächenbereich eine Lackschicht aufgetragen und dann
- in die Lackschicht ein Relief eingebracht wird, welches einen optisch variablen Effekt erzeugt.

17. Vorrichtung zur Herstellung eines Datenträgers (1), wie eines Wertpapiers oder dergleichen, mit einem optisch variablen Element (5, 6), insbesondere einem Hologramm, das ein Glättwerk (52) aufweist, das den Datenträger, der eine erste Oberfläche (9) mit einer ersten Oberflächenrauhigkeit besitzt, welche ein darauf aufgebrachtes optisch variables Element stört, in wenigstens einem Teilbereich glättet, um so einen zweiten Oberflächenbereich (15, 20, 21) zu erzeugen, der eine zweite Obeflächenrauhigkeit aufweist, welche ein darauf aufgebrachtes optisch variables Element weniger stört, **gekennzeichnet** durch eine Einrichtung (56) zum Aufbringen eines vorgefertigten optisch variablen Elements (5, 6) in dem zweiten Oberflächenbereich (15, 20, 21).

18. Vorrichtung nach Anspruch 17, dadurch **gekennzeichnet,** daß das Glättwerk (52) mindestens einen Kalanderzylinder (30, 53) enthält, der erhabene Bereiche (31, 32) aufweist, wobei die erhabenen Bereiche (31, 32) so angeordnet sind, daß eine Komprimierung und Glättung des Datenträgers (1), insbesondere in dem zweiten Oberflächenbereich (15, 20, 21) erfolgt.

19. Vorrichtung nach Anspruch 18, dadurch **gekennzeichnet,** daß die Erhebungen (31, 52) eine Höhe von mm-Bruchteilen, vorzugsweise eine Höhe von 5 bis 50 µm aufweisen.

20. Vorrichtung nach Anspruch 17, dadurch **gekennzeichnet,** daß das Glättwerk (53) ein Düsenauftragwerk mit seitlich begrenzten Schlitzdüsen für streifenweisen Auftrag einer Streichfarbe, einer Gußmasse oder einer Beschichtung ist.

21. Vorrichtung nach Anspruch 20, dadurch **gekennzeichnet,** daß zusätzlich ein Glättwerk (53) mit polierten Kalandrierzylindern vorgesehen ist, das die aufgetragene Streichfarbe, Gußmasse oder Beschichtung glättet.

22. Vorrichtung nach wenigestens einem der Ansprüche 17 bis 21, dadurch **gekennzeichnet**, daß die Vorrichtung zusätzliche Einrichtungen, wie eine Einrichtung zum Auftragen eines Haftvermittlers (54), Einrichtungen (55, 62) zum Trocknen oder Härten des Haftvermittlers, Einrichtungen zum Auftragen von Schutzlacken, Einrichtungen zum Bedrucken von Papierbahnen aufweist.

23. Vorrichtung zur Herstellung eines Datenträgers (1), wie eines Wertpapiers oder dergleichen, mit einem optisch variablen Element (5, 6), insbesondere einem Hologramm, das ein Glättwerk (52) aufweist, das den Datenträger, der eine erste Oberfläche (9) mit einer ersten Oberflächenrauhigkeit besitzt, welche ein darauf aufgebrachtes optisch variables Element stört, in wenigstens einem Teilbereich glättet, um so einen zweiten Oberflächenbereich (15, 20, 21) zu erzeugen, der eine zweite Obeflächenrauhigkeit aufweist, welche ein darauf aufgebrachtes optisch variables Element weniger stört, dadurch **gekennzeichnet,** daß das Glättwerk den Datenträger durch Kompression glättet und die Vorrichtung weiterhin eine Einrichtung aufweist, welche ein optisch variables Element auf den durch Kompression geglätteten Bereich aufbringt.

## Claims

1. A data carrier (1) such as a paper of value or the like having an optically variable element (5, 6), in particular a hologram, and a first surface area (9) with a first surface roughness which causes a disturbance in an optically variable element applied thereto, characterized in that the data carrier has a second surface area (15, 20, 21) having a surface roughness which disturbs an optically variable element applied thereto less, and the optically variable element (56) is applied to this second surface area, the optically variable element (5, 6) being a prefabricated element.

2. The data carrier of claim 1, characterized in that the second surface area is produced by application of a coat, coating slip or casting slip.

3. The data carrier of claim 1 or 2, characterized in that the second surface area is produced by compression of the data carrier in this area.

4. The data carrier of at least one of claims 1 to 4, characterized in that the optically variable element is a transfer hologram.

5. A data carrier (1) such as a paper of value or the like having an optically variable element (5, 6), in particular a hologram, and a first surface area (9) with a first surface roughness which causes a disturbance in an optically variable element applied thereto, characterized in that the data carrier has a second surface area (15, 20, 21) having a surface roughness, due to a compression of the data carrier (1) in this area (15, 20, 21), which disturbs an optically variable element applied thereto less, and the optically variable element (5, 6) is applied to this second surface area (15, 20, 21), the optically variable element (5, 6) comprising at least one layer of lacquer applied to the data carrier (1) and containing the optically variable structures in the form of a relief.

6. The data carrier of at least one of claims 1 to 5, characterized in that the second surface area (15, 20, 21) extends over the surface of the data carrier in the form of a band, stripe or the like.

7. The data carrier of at least one of claims 1 to 5, characterized in that the second surface area (15, 20, 21) has the form of an island, spot or the like.

8. An antifalsification paper suitable for receiving an optically variable element and having a first surface area (9) with a first surface roughness which causes a disturbance in an optically variable element applied thereto, characterized in that the antifalsification paper has a second surface area (15, 20, 21) having a surface roughness, due to a compression of the paper in this area (15, 20, 21), which disturbs an optically variable element applied thereto less.

9. A method for producing a data carrier (1) such as a paper of value or the like having an optically variable element (5, 6), in particular a hologram, the data carrier having a substrate with a first surface area with a first surface roughness which causes a disturbance in an optically variable element applied thereto, characterized in that
the substrate is glazed at least in a partial area of the first surface area to produce a second surface area with a second surface roughness which disturbs an optically variable element applied thereto less,
a prefabricated optically variable element is applied tc the second surface area in one or more method steps,
the substrate is subjected to any further method steps and finally cut into individual data carriers.

10. The method of claim 9, characterized in that the second surface area (15, 20, 21) is glazed by compression.

11. The method of claim 10, characterized in that a coat is applied in the area to be compressed prior to compression.

12. The method of claim 10 or 11, characterized in that the second surface area (15, 20, 21) is glazed by calendering or satining.

13. The method of claim 9, characterized in that the second surface area (20, 21) is glazed by application of a coating slip, a casting slip or a coat.

14. The method of claim 13, characterized in that the coating slip, casting slip or coat is glazed in an additional glazing unit.

15. The method of at least one of claims 9 to 12, characterized in that the glazing of the substrate (1) is performed over its total area, the partial areas of the second surface (15, 20, 21) being glazed to a greater degree than the remaining area of the substrate.

16. A method for producing a data carrier (1) such as a paper of value or the like having an optically variable element (5, 6), in particular a hologram, the data carrier having a substrate with a first surface area with a first surface roughness which causes a disturbance in an optically variable element applied thereto, characterized in that
the substrate is compressed at least in a partial area of the first surface area to produce a second surface area which disturbs an optically variable element applied thereto less,
a layer of lacquer is applied to the second surface area, and then
a relief producing an optically variable effect is incorporated in the layer of lacquer.

17. An apparatus for producing a data carrier (1) such as a paper of value or the like having an optically variable element (5, 6), in particular a hologram, which has a glazing unit (52) for glazing the data carrier having a first surface (9) with a first surface roughness which disturbs an optically variable element applied thereto, in at least a partial area to produce a second surface area (15, 20, 21) having a second surface roughness which disturbs an optically variable element applied thereto less, characterized by a device (56) for applying a prefabricated optically variable element (5, 6) in the second surface area (15, 20, 21).

18. The apparatus of claim 17, characterized in that the glazing unit (52) includes at least one calendering cylinder (30, 53) having raised areas (31, 32), the raised areas (31, 32) being disposed in such a way that the data carrier (1) is compressed and glazed, in particular in the second surface area (15, 20, 21).

19. The apparatus of claim 18, characterized in that the raised areas (31, 52) have a height in the range of fractions of a millimeter, preferably a height of 5 to 50 micrometers.

20. The apparatus of claim 17, characterized in that the glazing unit (53) is a nozzle coating system with laterally limited slot nozzles for applying in stripes a coating slip, a casting slip or a coat.

21. The apparatus of claim 20, characterized in that a glazing unit (53) with polished calendering cylinders is additionally provided for glazing the applied coating slip, casting slip or coat.

22. The apparatus of at least one of claims 17 to 21, characterized in that the apparatus has additional devices, such as a device for applying a bonding agent (54), devices (55, 62) for drying or hardening the bonding agent, devices for applying protective lacquers, devices for printing paper webs.

23. An apparatus for producing a data carrier (1) such as a paper of value or the like having an optically variable element (5, 6), in particular a hologram, which has a glazing unit (52) for glazing the data carrier having a first surface (9) with a first surface roughness which disturbs an optically variable element applied thereto, in at least a partial area to produce a second surface area (15, 20, 21) having a second surface roughness which disturbs an optically variable element applied thereto less, characterized in that the glazing unit glazes the data carrier by compression, and the apparatus further has a device for applying an optically variable element to the area glazed by compression.

## Revendications

1. Support de données (1) tel qu'un papier valeur ou analogue, avec un élément (5,6) optiquement variable, en particulier un hologramme, et une première région de surface (9) avec une première rugosité de surface, provoquant des irrégularités dans un élément optiquement variable disposé sur cette première région de surface, caractérisé en ce que le support de données présente une deuxième région de surface (15, 20, 21) dont la rugosité de surface provoque des irrégularités moindres dans un élément optiquement variable qui est déposé sur cette deuxième région de surface; et en ce que l'élément optiquement variable (5, 6) est déposé sur cette deuxième région de surface, l'élément optiquement variable étant un élément préparé à l'avance.

2. Support de données selon la revendication 1, caractérisé en ce que la deuxième région de surface est obtenue par dépôt d'un revêtement, d'un couchage ou d'une masse de remplissage.

3. Support de données selon la revendication 1, caractérisé en ce que la deuxième région de surface est obtenue par compression du support de données dans cette région.

4. Support de données selon au moins l'une des revendications 1 à 3, caractérisé en ce que l'élément optiquement variable est un hologramme de transfert.

5. Support de données (1) tel qu'un papier valeur ou analogue, avec un élément (5,6) optiquement variable, en particulier un hologramme et une première région de surface (9) avec une première rugosité de surface, provoquant des irrégularités dans un élément optiquement variable disposé sur cette première région de surface, caractérisé en ce que le support de données présente une deuxième région de surface (15, 20, 21) présentant, du fait d'une compression du support de données (1) dans cette région (15, 20, 21), une rugosité de surface provoquant des irrégularités moindres, sur un élément optiquement variable (5,6) qui est déposé sur cette deuxième région de surface, et en ce que l'élément optiquement variable (5, 6) est déposé sur cette deuxième région de surface (15, 20, 21), dans lequel l'élément optiquement variable (5, 6) est constitué d'au moins une couche de laque déposée sur le support de données (1), dans laquelle couche les structures optiquement variables sont formées par des reliefs.

6. Support de données selon au moins l'une des revendications 1 à 5, caractérisé en ce que la deuxième région de surface (15, 20, 21) s'étend sur la surface du support de données sous forme d'une bande, de rayures ou analogues.

7. Support de données selon au moins une des revendications 1 à 5, caractérisé en ce que la deuxième région de surface (15, 20, 21) présente la forme d'une île, d'une tache ou analogue.

8. Papier de sécurité, qui est approprié pour recevoir un élément optiquement variable, et qui présente une première région de surface (9) avec une première rugosité de surface, provoquant des irrégularités dans un élément optiquement variable disposé sur cette région de surface, caractérisé en ce que le papier de sécurité comporte une deuxième région de surface (15, 20, 21) présentant, du fait d'une compression du papier dans cette région (15, 20, 21), une rugosité de surface provoquant des irrégularités moindres dans un élément variable disposé sur cette seconde région.

9. Procédé de fabrication d'un support de données (1), tel qu'un papier valeur ou analogue, avec un élément optiquement variable (5, 6), en particulier un hologramme, dans lequel le support de données comporte un substrat avec une première région de surface, présentant une première rugosité de surface, qui provoque une irrégularité dans un élément optiquement variable qui est déposé sur cette première région de surface, caractérisé en ce que
- le substrat est lissé au moins dans une partie de la première région de surface, pour réaliser une seconde région de surface présentant une deuxième rugosité de surface, qui provoque des irrégularités moindres dans un élément optiquement variable déposé sur cette deuxième région de surface,
- en une ou plusieurs étapes de procédé, on dépose sur cette deuxième région de surface, un élément optiquement variable préparé à l'avance, et
- on soumet le substrat à d'éventuelles autres étapes de procédé et finalement on le découpe en supports de données individuels.

10. Procédé selon la revendication 9, caractérisé en ce qu'on lisse par compression la deuxième région de surface (15, 20, 21).

11. Procédé selon la revendication 10, caractérisé en ce qu'on dépose un revêtement sur la région à comprimer avant la compression.

12. Procédé selon la revendication 10 ou 11, caractérisé en ce qu'on lisse par calandrage ou satinage la deuxième région de surface (15, 20, 21).

13. Procédé selon la revendication 9, caractérisé en ce que la deuxième région de surface (20, 21) est lissée par dépôt d'une couleur de couchage, d'une masse de remplissage ou d'un revêtement.

14. Procédé selon la revendication 13, caractérisé en ce que la couleur de couchage, la masse de remplissage ou le revêtement est lissé par un outil de lissage supplémentaire.

15. Procédé selon au moins l'une des revendications 9 à 12, caractérisé en ce que le lissage du substrat (1) s'effectue au-dessus de sa surface totale, de telle sorte que les parties de surface de la deuxième surface (15, 20, 21) soient lissées plus fortement que le reste des surfaces du substrat.

16. Procédé de fabrication d'un support de données (1), tel qu'un papier valeur ou analogue, présentant un élément optiquement variable (5, 6), en particulier un hologramme, dans lequel le support de données comporte un substrat présentant une première région de surface avec une première rugosité de surface provoquant des irrégularités sur un élément optiquement variable déposé sur cette première région de surface, caractérisé en ce que:
- le substrat est comprimé dans au moins une partie de la surface de la première région de surface, pour produire une deuxième région de surface, qui provoque moins d'irrégularités sur un élément optiquement variable qui y est déposé;
- une couche de laque est déposée sur la deuxième région de surface, et
- un relief produisant un effet optiquement variable est formé dans la couche de laque.

17. Dispositif de fabrication d'un support de données (1), tel qu'un papier valeur ou analogue, avec un élément optiquement variable (5, 6), en particulier un hologramme, présentant un outil de lissage (52) qui lisse sur au moins une partie de la surface le support de données, ledit support de données présentant une première surface (9) avec une première rugosité de surface, qui provoque des irrégularités sur un élément optiquement variable qui y est déposé, de telle sorte à produire ainsi une deuxième région de surface (15, 20, 21), qui présente une deuxième rugosité de surface, provoquant des irrégularités moindres sur un élément optiquement variable qui y est déposé, caractérisé par un dispositif (56) de dépôt d'un élément optiquement variable préparé à l'avance (5, 6) sur la deuxième région de surface (15, 20, 21).

18. Dispositif selon la revendication 17, caractérisé en ce que l'outil de lissage (52) contient au moins un cylindre de calandrage (30, 53), qui présente des zones en saillie, les zones en saillie étant disposées de telle sorte qu'une compression et un lissage du support de données (1) se produisent, en particulier dans la deuxième région de surface (15, 20, 21).

19. Dispositif selon la revendication 18, caractérisé en ce que les zones en saillie (31, 32) présentent une hauteur de quelques fractions de millimètre, de préférence une hauteur de 5 à 50 µm.

20. Dispositif selon la revendication 17, caractérisé en ce que l'outil de lissage (53) est constitué par un outil de dépôt à buses, présentant des buses à fentes limitées latéralement pour le dépôt en bandes d'une couleur de couchage, d'une masse de remplissage ou d'un revêtement.

21. Dispositif selon la revendication 20, caractérisé en ce qu'il comprend en outre un outil de lissage à cylindres de calandrage polis, et qui lisse la couleur de couchage, la masse de remplissage, ou la couche déposées.

22. Dispositif selon au moins l'une des revendications 17 à 21, caractérisé en ce que le dispositif présente des appareils supplémentaires, tels qu'un appareil de dépôt d'un moyen de collage (54), des appareils (55, 62) de séchage ou de durcissement du moyen de collage, des appareils de dépôt de couches de laque, des appareils d'impression de bandes de papier.

23. Dispositif de fabrication d'un support de données (1), tel qu'un papier valeur ou analogue, avec un élément optiquement variable (5, 6), en particulier un hologramme, présentant un outil de lissage (52) qui lisse sur au moins une partie de la surface le support de données, ledit support de données présentant une première surface (9) avec une première rugosité de surface, qui provoque des irrégularités sur un élément optiquement variable qui y est déposé, de telle sorte à produire ainsi une deuxième région de surface (15, 20, 21), qui présente une deuxième rugosité de surface, provoquant des irrégularités moindres sur un élément optiquement variable qui y est déposé, caractérisé en ce que l'outil de lissage lisse le support de données par compression, et en ce que le dispositif présente en outre un appareil qui dépose un élément optiquement variable sur la région lissée par compression.
